# FASCICULE DE BREVET EUROPEEN

(11) **EP 4 267 371 B1**
(45) Date de publication et mention de la délivrance du brevet: **21.08.2024**
(21) Numéro de dépôt: 21840939.9
(22) Date de dépôt: 21.12.2021
(51) Int. Cl.: B29C 49/68, B29C 49/64, B29C 49/06, B29L 31/00

(54) **PROCÉDÉ DE POSITIONNEMENT AUTOMATIQUE DE RAMPES DANS UNE STATION DE CHAUFFAGE DE PRÉFORMES**
VERFAHREN ZUR AUTOMATISCHEN POSITIONIERUNG VON RAMPEN IN EINER VORFORMHEIZSTATION
METHOD FOR AUTOMATICALLY POSITIONING RAMPS IN A PREFORM HEATING STATION

(30) Priorité: 22.12.2020 FR 2013880
(43) Date de publication de la demande: 01.11.2023
(73) Titulaire: Sidel Participations, 76930 Octeville-sur-Mer (FR)
(72) Inventeur: BOURVELLEC, Loïc, 76930 Octeville-sur-Mer (FR); PASQUIER, Hervé, 76930 Octeville-sur-Mer (FR)
(74) Mandataire: Sidel Group
(86) Numéro de dépôt international: PCT/EP2021/087005
(87) Numéro de publication internationale: WO 2022/136380

(56) Documents cités:
- FR-A1- 3 080 056
- US-A1- 2008 102 148
- US-A1- 2011 300 497
- US-A1- 2016 346 988

## Description

### Domaine technique de l'invention

L'invention se rapporte à un procédé de positionnement automatique de rampes dans une station de chauffage de préformes d'une installation de fabrication de récipients à partir de préformes en matériau thermoplastique, lors d'un changement de format de préformes.

Des procédés apparentés et selon l'art antérieur sont décrits dans les documents FR3080056A1, US2008/102148A1 et US2016/346988A1.

### Arrière-plan technique

On connaît déjà des installations de fabrication de récipients en grandes séries à partir de préformes. Les préformes sont généralement obtenues par injection d'un matériau thermoplastique. Puis, elles sont refroidies et stockées en vue de leur transformation ultérieure en récipients finaux.

Les préformes comportent classiquement un corps qui est destiné à être conformé en récipient final lors d'une opération de formage, par exemple par soufflage ou par étirage-soufflage, de la paroi de la préforme. Les préformes comportent aussi un col qui est déjà moulé à sa forme définitive. Il est donc important de protéger le col de la préforme afin qu'il ne soit ni déformé ni endommagé durant la fabrication du récipient final.

Pour permettre le formage du corps de la préforme lors de l'étape de formage, la paroi du corps est préalablement chauffée à une température suffisante pour la rendre malléable. Cette opération de chauffage est réalisée juste avant l'opération de formage par passage de la préforme dans une station de chauffage.

La station de chauffage comporte généralement un tunnel de chauffage dans lequel sont agencés des dispositifs de chauffage, telles que des lampes à infrarouge. Les préformes sont prises en charge par des organes de transport qui font défiler leur corps dans le tunnel de chauffage. Pour permettre un chauffage homogène du corps des préformes, les organes de transport sont généralement conçus pour entraîner la préforme en rotation autour de son axe principal lors de son transport. Pour éviter toute surchauffe du corps de la préforme, il est aussi connu d'équiper de tunnel de chauffage de moyens de ventilation qui permettent de faire circuler l'air, évitant ainsi la création de zones trop chaudes dans le tunnel de chauffage.

Le corps de la préforme est rendu malléable par chauffage du matériau thermoplastique constituant sa paroi, notamment au-delà d'une température de transition vitreuse.

Comme expliqué précédemment, le col de la préforme présente déjà sa forme définitive. Contrairement au corps de la préforme, le col est donc maintenu à une température inférieure à ladite température de transition vitreuse pour éviter sa déformation.

A cet effet, la station de chauffage est conçue pour que le corps de la préforme soit reçu dans une partie "chaude" de la station formée par le tunnel de chauffage, tandis que le col de la préforme, qui doit rester relativement froid, est reçu dans une partie "froide" qui est généralement située sous le tunnel de chauffage.

Bien entendu, la partie chaude et la partie froide de la station de chauffage sont adjacentes. Pour réduire les échanges thermiques entre la partie chaude et la partie froide, il est connu d'interposer entre ces deux parties des rampes de protection thermique entre lesquelles les préformes défilent. Ces rampes de protection permettent de diminuer l'ouverture le tunnel de chauffage et la partie froide. Les rampes de protection sont écartées pour former une fente de défilement qui présente une largeur légèrement supérieure au diamètre externe du tronçon de préforme situé directement sous le col afin de permettre le défilement des préformes sans contact avec les rampes de protection.

Ces deux rampes de protection sont généralement refroidies par circulation interne d'un liquide caloporteur pour éviter que les rampes de protection n'accumulent de la chaleur.

Par ailleurs, certaines installations de fabrication comportent aussi des rampes de guidage qui permettent de guider les préformes au lieu de simplement les refroidir. C'est par exemple le cas dans des stations de chauffage utilisant des moyens de chauffage par laser pour chauffer le corps des préformes.

En outre, les installations de fabrication de récipient sont prévues pour permettre de réaliser des récipients finaux de formats différents. Ceci entraîne généralement l'utilisation de préformes de différents formats en fonction du lot de récipient à produire.

Lors d'un changement de format de récipient, il est donc nécessaire d'adapter l'installation, et notamment la station de chauffage, aux dimensions des nouvelles préformes. Ceci implique notamment d'effectuer un réglage de l'écartement des rampes pour adapter la largeur de la fente au diamètre sous col des préformes du nouveau format. Parfois, les rampes doivent aussi être réglées en hauteur en fonction de la hauteur de col des préformes.

Le réglage purement manuel de la position de chaque rampe de protection requiert du temps.

On a déjà proposé de régler de positionner les rampes de protection de façon semi-automatique en entrant dans une unité électronique de commande le diamètre sous col théorique du lot de préforme qui va être traité. L'unité électronique de commande pilote alors des moyens de déplacement motorisés des rampes de protection afin d'obtenir une largeur de fente adaptée audit diamètre sous col théorique.

Cependant, une telle méthode n'est pas robuste car en cas de défaut de conception ou de défaut d'étiquetage du lot de préformes, l'écartement des rampes peut être soit trop important, favorisant le passage de chaleur du tunnel vers la partie froide et/ou ne permettant un guidage optimal des préformes, soit trop faible, provoquant un blocage des préformes lorsqu'elles pénètrent entre les rampes de protection.

En tous les cas, cette méthode ne permet pas de réaliser un écartement optimal des rampes de protection en rapport avec la valeur réelle du diamètre sous col des préformes.

### Résumé de l'invention

L'invention propose un procédé de positionnement automatique de rampes dans une station de chauffage de préformes d'une installation de fabrication de récipients à partir de préformes en matériau thermoplastique, chaque préforme présentant un col et, directement au-dessous du col, un tronçon sous col de diamètre extérieur dit "diamètre sous col", la station de chauffage comportant :
- au moins une paire de rampes longitudinales qui délimitent une fente de défilement des préformes, au moins l'une des rampes étant mobile transversalement pour faire varier la largeur de la fente ;
- au moins un dispositif motorisé de déplacement transversal de l'au moins une rampe mobile pour adapter la largeur de la fente, ledit dispositif motorisé étant piloté automatiquement par une unité électronique de commande ;

le procédé de positionnement lors d'un changement de format de préformes étant caractérisé en ce qu'il comporte :
- une étape d'acquisition d'une image d'au moins une partie de la préforme prise au moyen d'un dispositif de capture d'image ;
- une étape de détermination automatique du diamètre sous col de la préforme par traitement informatique de ladite image ;
- une étape d'ajustement automatique de la largeur de la fente par déplacement de l'au moins une rampe mobile en fonction du diamètre sous col déterminé lors de l'étape de détermination du diamètre sous col afin d'adapter la largeur de la fente jusqu'à une largeur de passage égale au diamètre sous col additionné d'un jeu transversal déterminé.

Selon d'autres caractéristiques du procédé de l'invention :
- lors de l'étape d'acquisition, le dispositif de capture d'image prend le profil au moins du tronçon sous col de la préforme ;
- le dispositif de capture d'image est agencé à une distance prédéterminée de la préforme lors de l'opération de prise d'image ;
- lors de l'étape de détermination du diamètre sous col, le diamètre sous col est obtenu par multiplication de la largeur du tronçon sous col mesurée sur l'image par un coefficient de proportionnalité prédéterminé ;
- lors de l'étape de détermination du diamètre sous col, le contour de la partie de préforme représentée sur l'image est comparé avec des contours de préformes mémorisés par l'unité électronique de commande, chaque contour mémorisé étant associé à un diamètre sous col mémorisé par l'unité électronique de commande ;
- les préformes présentent un axe principal orthogonal à leur sens de défilement, le col des préformes présentant une collerette agencée à la jonction avec le tronçon sous col, les rampes de la paire étant réglables en hauteur, parallèlement à l'axe principal des préformes au moyen d'un dispositif motorisé de déplacement vertical des rampes, et, lors de l'étape d'acquisition, le dispositif de capture d'image prenant le profil au moins du col et du tronçon sous col de la préforme, le procédé comportant une étape de détermination automatique d'une hauteur de col par traitement informatique de ladite image, cette étape de détermination de la hauteur de col étant suivie d'une étape d'ajustement automatique de la hauteur des rampes en fonction de la hauteur de col déterminée ;
- lors de l'étape de détermination de la hauteur de col, la hauteur de col est obtenue par multiplication de la hauteur de col mesurée sur l'image par un coefficient de proportionnalité prédéterminé ;
- lors de l'étape de détermination de la hauteur de col, le contour de l'image est comparé avec des contours de préformes mémorisés par l'unité électronique de commande, chaque contour mémorisé étant associé à une hauteur de col mémorisée par l'unité électronique de commande ;
- l'étape d'acquisition est réalisée sur une préforme qui circule le long d'un trajet de production dans l'installation de fabrication ;
- l'étape d'acquisition étant réalisée sur une préforme qui circule dans la station de chauffage dans une zone déterminée le long d'un chemin de chauffage ;
- le procédé comporte une étape préalable de positionnement initial des rampes automatiquement jusqu'à ce que la fente présente une largeur maximale.
- lors de l'étape préalable de positionnement initial automatique des rampes, les rampes sont déplacées verticalement jusqu'à une hauteur maximale dans laquelle les rampes sont écartées du col de la préforme d'une distance verticale maximale ;
- au moins une paire de rampes est formée de rampes de protection thermique du col des préformes ;
- au moins une paire de rampes est formée de rampes de guidage de la préforme.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la [Fig.1] est une vue de dessus qui représente schématiquement une station de chauffage qui est susceptible de mettre en oeuvre le procédé réalisé selon les enseignements de l'invention.
[Fig.2] la [Fig.2] est une vue en coupe transversale selon le plan de coupe 2-2 de la [Fig.1] qui représente une préforme circulant dans un tunnel de chauffage de la station de chauffage entre deux rampes positionnées de manière optimale par rapport à la préforme, la station de chauffage étant réalisée selon un premier mode de réalisation.
[Fig.3] la [Fig.3] est une vue similaire à celle de la [Fig.2] dans laquelle seuls les rampes et des dispositifs de déplacement des rampes ont été représentés, les rampes occupant une position initiale correspondant au début du procédé selon l'invention.
[Fig.4] la [Fig.4] est une vue similaire à celle de la [Fig.3] dans laquelle les rampes occupent une position finale optimale par rapport à la préforme.
[Fig.5] la [Fig.5] est une vue similaire à celle de la [Fig.3] dans laquelle la station de chauffage est réalisée selon un deuxième mode de réalisation, les rampes occupant une position initiale correspondant au début du procédé selon l'invention.
[Fig.6] la [Fig.6] est une vue similaire à celle de la [Fig.5] dans laquelle les rampes occupent une position finale optimale par rapport à la préforme.
[Fig.7] la [Fig.7] est une vue de dessus d'un tronçon longitudinal du tunnel de la station de chauffage réalisée selon l'un quelconque des modes de réalisation qui représente les rampes et leur dispositif de motorisation.
[Fg.8] la [Fig.8] est un schéma-bloc qui représente le procédé de positionnement automatique des rampes réalisé selon les enseignements de l'invention.

### Description détaillée de l'invention

Dans la suite de la description, des éléments présentant une structure identique ou des fonctions analogues seront désignés par une même référence.

Dans la suite de la description, on adoptera à titre non limitatif des orientations longitudinale, dirigée d'arrière en avant, transversale, dirigée de gauche à droite, et verticale dirigée de bas en haut, indiquées par le trièdre "L,V,T" des figures. La direction verticale est utilisée à titre de repère purement géométrique sans rapport avec la gravité terrestre.

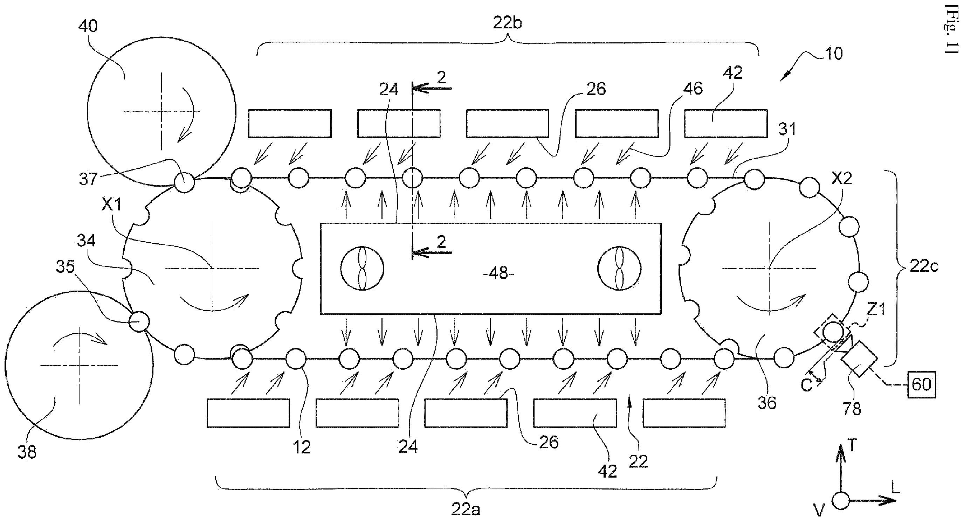

On a représenté à la [Fig.1] une station 10 de chauffage appartenant à une installation de fabrication de récipients par formage de préformes 12 en matériau thermoplastique, tel que du polyéthylène téréphtalate (PET), par soufflage ou étirage-soufflage. Les préformes 12 défilent les unes derrière les autres le long d'un trajet de production qui traverse diverses station de traitement, y compris la station de chauffage, de l'installation de fabrication.

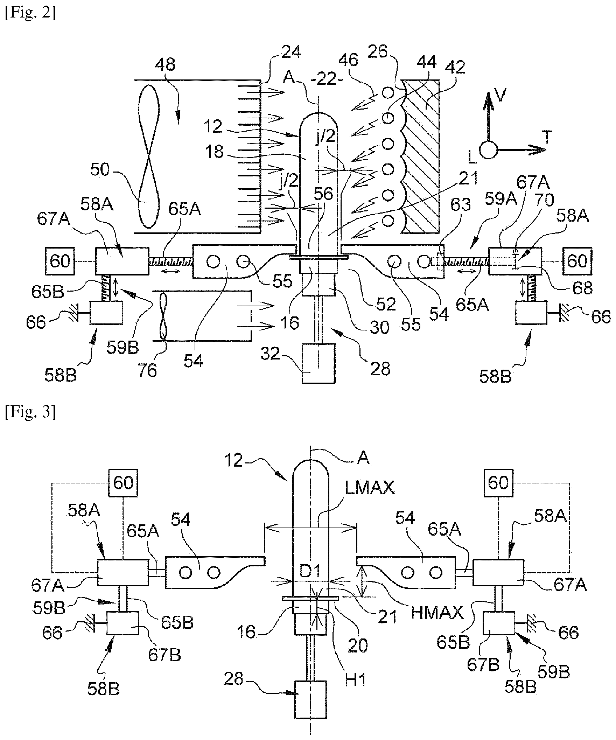

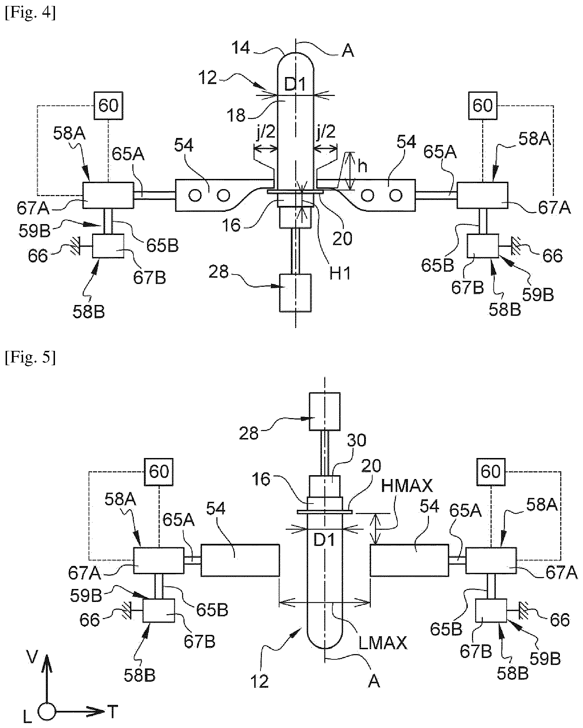

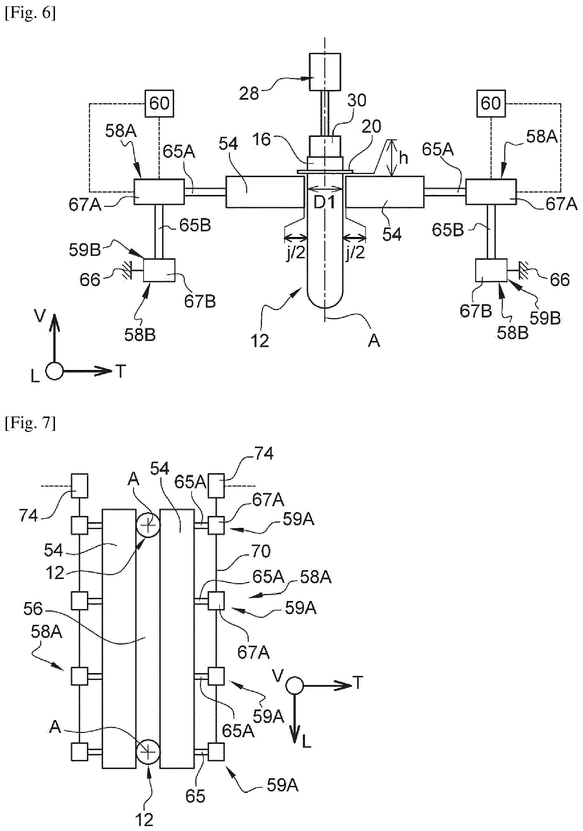

Comme cela est représenté aux figures 2 à 6, une préforme 12 se présente sous la forme d'un corps creux axisymétrique d'axe "A" principal qui est ici représenté verticalement. La préforme 12 est fermée à une première extrémité axiale par un fond 14, représenté ici en haut aux figures 2 à 4 et en bas aux figures 5 et 6, et elle est ouverte à une extrémité axiale opposée formant un col 16, représenté ici en bas aux figures 2 à 4 et en haut aux figures 5 et 6. La préforme 12 est ainsi divisée axialement en un premier tronçon qui s'étend du fond 14 jusqu'au début du col 16, ce premier tronçon étant communément appelé corps 18 de la préforme, et en un deuxième tronçon formé par ledit col 16. A sa jonction avec le corps 18 de la préforme 12, le col 16 comporte une collerette 20.

Le tronçon de corps 18 agencé directement au contact de la collerette 20, et représenté ici juste au-dessus du col 16 en référence aux figures 2 à 4, sera par la suite appelé tronçon 21 sous col. Le diamètre extérieur du tronçon 21 sous col, sera désigné par la suite "diamètre D1 sous col" (car la préforme 12 est ici présentée retournée aux figures 2 à 4). De même la hauteur du col 16 prise selon l'axe "A" principal de la préforme 12 sera par la suite appelée "hauteur H1 de col".

De manière connue, le corps 18 de la préforme 12 est destiné à être étiré pendant une opération de formage du récipient final, tandis que le col 16 de la préforme 12 présente déjà la forme requise pour le récipient final. A cet effet, le corps 18 est destiné à être chauffé dans la station 10 de chauffage de manière à devenir malléable, tandis que le col 16 est destiné à rester tempéré dans la station 10 de chauffage pour éviter de le déformer.

En référence à la [Fig.1], la station 10 de chauffage comporte un tunnel 22 de chauffage qui présente ici deux tronçons 22a, 22b longitudinaux reliés entre eux par un virage 22c d'extrémité. Chaque tronçon 22a, 22b longitudinal du tunnel 22 de chauffage est délimité transversalement par une paroi 24 intérieure et par une paroi 26 extérieure.

La station 10 de chauffage comporte en outre des organes 28 de transport individuel des préformes 12 en file le long du tunnel 22 de chauffage le long d'un chemin de chauffage qui forme un tronçon du trajet de production. Les préformes 12 sont ici transportées avec leur axe "A" vertical et col 16 dirigé vers le bas au niveau des tronçons 22a, 22b longitudinaux et au niveau du virage 22c d'extrémité pour protéger le col 16 de la chaleur. L'axe "A" principal des préformes 12 est ainsi orthogonal à leur sens de défilement le long du chemin de chauffage.

En variante représentée aux figures 5 et 6, l'invention est aussi applicable à des préformes qui sont transportées avec le col transporté vers le haut.

Comme représenté aux figures 2 à 6, un organe 28 de transport comporte généralement un mandrin 30, aussi appelé tournette, qui est destiné à être inséré à l'intérieur du col 16 de la préforme 12 à transporter.

Le défilement des préformes 12 ici réalisé par une chaîne 31 fermée d'organes 28 de transport. Pour ce faire, chaque organe 28 de transport comporte ici un maillon 32 qui sert de support au mandrin 30. Chaque maillon 32 est articulé aux maillons 32 des organes 28 de transport adjacents.

Le mandrin 30 est généralement monté rotatif autour d'un axe vertical sur le maillon 32 pour permettre l'entraînement en rotation des préformes 12 transportées autour de leur axe "A" principal pendant leur déplacement le long du tunnel 22.

La chaîne 31 est guidée et mise en mouvement par engrènement autour de deux roues 34, 36 de guidage. Chaque roue 34, 36 de guidage est montée à rotation autour d'un axe "X1, X2" vertical central associé. Les roues 34, 36 de guidage sont agencées aux deux extrémités longitudinales des tronçons 22a, 22b longitudinaux de tunnel 22 de chauffage.

Au moins l'une des roues 34, 36 de guidage est entraînée en rotation pour déplacer les mandrins 30 en déplacement. Par exemple, l'une des deux roues 34, 36 de guidage est entraînée par un moteur tandis que l'autre des deux roues 34, 36 de guidage, dite roue menée, est entraînée en rotation par la chaîne 31.

En variante, chacune des deux roues de guidage est entraînée en rotation par un moteur, par exemple au moyen d'un moteur brushless. Les deux roues de guidage sont entraînées conjointement en rotation. Cela permet avantageusement de réduire la tension dans la chaîne 31.

En variante non représentée, l'invention est aussi applicable à des organes de transport qui sont portés par des navettes indépendantes qui se déplacent le long d'un rail. Chaque navette forme par exemple avec le rail un moteur électrique linéaire.

La première roue 34 de guidage est configurée pour permettre de charger des préformes 12 froides en un point 35 de chargement situé en amont du premier tronçon 22a longitudinal selon le sens de déplacement des préformes 12. Les préformes 12 froides sont délivrées par une roue 38 d'entrée. La première roue 34 de guidage est aussi configurée pour permettre de décharger les préformes 12 chaudes en un point 37 de déchargement situé en aval du deuxième tronçon 22b longitudinal et en amont du point 35 de chargement. Les préformes 12 chaudes sont prises en charge par une roue 40 de sortie.

La deuxième roue 36 de guidage permet de réaliser le virage 22c d'extrémité du tunnel 22 de chauffage entre les deux tronçons 22a, 22b longitudinaux.

Au moins l'une des deux roues 34, 36 de guidage est mue en rotation par un moteur (non représenté) pour entraîner la chaîne en rotation dans un sens antihoraire en se référant à la [Fig.1]. Les préformes 12 défilent ainsi, retournées col 16 en bas aux figures 2 à 4 ou col en haut aux figures 5 et 6, successivement longitudinalement vers l'avant le long du chemin de chauffage à travers le premier tronçon 22a de tunnel, puis dans le virage 22c d'extrémité et enfin longitudinalement vers l'arrière à travers le deuxième tronçon 22b de tunnel.

Selon un premier mode de réalisation de la station 10 de chauffage représentée aux figures 2 à 4, la paroi 26 extérieure du tunnel 22 de chauffage est ici formée par la face interne d'une pluralité de modules 42 de chauffage. Chaque module 42 de chauffage comporte des moyens de chauffage radiant qui irradient un rayonnement 46 chauffant globalement transversalement vers l'intérieur du tunnel 22 de chauffage, comme cela est illustré à la [Fig.2]. Il s'agit ici, à titre non limitatif, de lampes 44 ou de diodes laser émettant dans le spectre des infrarouges.

La paroi 24 intérieure du tunnel 22 de chauffage est ici formée par une face d'un bloc 48 de refroidissement. Le bloc 48 de refroidissement est ici agencé transversalement entre les deux tronçons 22a, 22b longitudinaux de tunnel. Comme cela est représenté schématiquement à la [Fig.2], le bloc 48 de refroidissement comporte des moyens d'aération tels qu'un ventilateur 50 soufflant un flux d'air forcé qui est dirigé transversalement vers l'intérieur du tunnel 22 à travers une grille formée dans la paroi 24 intérieure.

Le tunnel 22 est destiné à recevoir les corps 18 des préformes 12 retournées col 16 en bas, leur axe "A" étant vertical, pour permettre leur chauffage à la température pour l'opération ultérieure de formage des récipients finaux.

En variante non représentée, les préformes défilent à l'endroit, col en haut.

Le tunnel 22 débouche verticalement vers le bas sur un couloir 52 de défilement des cols 16 des préformes 12. Comme expliqué précédemment, les cols 16 des préformes 12 doivent être tempérés, c'est-à-dire maintenus à une température inférieure à la température de transition vitreuse du matériau les constituant.

Lorsque les modules 42 de chauffage comportent des moyens de chauffage radiant, les radiations sont émises dans toutes les directions, y compris vers le col 16 des préformes 12. Pour limiter le passage de radiations chauffantes du tunnel 22 vers le couloir 52 ou le passage d'air chaud par convection, au moins une paire de rampes 54 de protection thermique des cols 16 des préformes 12 est interposée verticalement entre le tunnel 22 recevant les corps des préformes et le couloir 52 recevant les cols 16 des préformes. Les rampes 54 de protection délimitent ainsi verticalement le tunnel 22. Les rampes 54 de protection s'étendent parallèlement dans une direction longitudinale. Chaque tronçon 22a, 22b longitudinal est ici équipé d'une paire de rampes 54 de protection.

La face supérieure de chaque rampe 54 de protection, tournée vers le tunnel 22, forme avantageusement une surface réfléchissante qui permet de réfléchir les rayonnements chauffant en direction du corps 18 de la préforme 12.

Pour éviter que la chaleur ne s'accumule dans les rampes 54 de protection, chaque rampe 54 de protection est avantageusement équipée de moyens 55 de refroidissement tel qu'un circuit de refroidissement dans lequel circule un fluide caloporteur.

Par ailleurs, pour éviter que la chaleur passant par une fente 56 ne chauffe l'air contenu dans le couloir 52, un deuxième moyen 76 de ventilation peut être agencé pour souffler transversalement un flux d'air forcé dans le couloir 52 afin d'en chasser l'air chaud, comme cela est représenté à la [Fig.2].

Selon un deuxième mode de réalisation de la station 10 de chauffage représenté aux figures 5 et 6, les moyens de chauffage sont formés par des organes d'émission d'un rayonnement laser chauffant. Le corps des préformes est alors chauffé localement sensiblement sans que la chaleur irradie dans toutes les directions. Dans ce cas, les moyens d'aération n'ont pas besoin d'être aussi puissants que dans la configuration de chauffage par des moyens de chauffage radiant. En outre, les préformes 12 circulent ici col 16 en haut car le tunnel 22 n'est pas exposé à des radiations importantes et le col 16 est donc moins susceptible d'être chauffé par convection comme dans le premier mode de réalisation.

En variante, il est bien entendu possible de faire circuler les préformes col en bas comme dans le premier mode de réalisation.

Dans ce deuxième mode de réalisation, la station de chauffage est aussi équipée d'au moins une paire de rampes, mais il s'agit ici de rampes de guidage des préformes. Les rampes n'ont alors pas de fonction de bouclier thermique comme c'est le cas pour les rampes de protection thermique. Ainsi, de tels rampes 54 de guidage sont similaires à celles représentés aux figures 3 et 4, cependant, elles ne présentent pas les moyens 55 de refroidissement.

Par la suite, on utilisera le terme "rampes 54" pour désigner indifféremment les rampes de protection et les rampes de guidage. L'invention est applicable indépendamment au premier mode de réalisation et au deuxième mode de réalisation de la station 10 de chauffage.

Les rampes 54 sont généralement agencées dans les tronçons 22a, 22b longitudinaux du tunnel 22. Ainsi, la station 10 de chauffage comporte généralement deux paires de rampes 54 chacune agencée dans un tronçon 22a, 22b longitudinal associé du tunnel 22, tandis que le virage 22c n'est pas équipé de rampes.

Les rampes 54 d'une paire sont agencées dans un même plan transversal longitudinal, de part et d'autre du chemin de chauffage des préformes 12. A cet effet, les rampes 54 sont écartées transversalement pour réserver une fente 56 longitudinale de défilement des préformes 12.

Les rampes 54 d'une paire sont agencées au niveau du tronçon 21 sous col, c'est-à-dire au-dessus de la collerette 20 des préformes 12 lorsqu'elles défilent col 16 en bas ou au-dessous de la collerette 20 lorsqu'elles défilent col 16 en haut.

En cours de fonctionnement de production de la station de chauffage, la fente 56 présente une largeur transversale égale à la somme du diamètre sous col "D1" de la préforme 12 et d'un jeu "j" transversal, comme cela est représenté aux figures 2, 4 et 6. Le jeu "j" transversal est réparti en deux parties "j/2" sensiblement égales transversalement de part et d'autre de la préforme 12 pour permettre son défilement entre les rampes 54 sans contact avec ces dernières. Ainsi, le jeu "j" est égal à la somme des parties "j/2 + j/2". La largeur de la fente 56 est ici inférieure au diamètre extérieur de la collerette 20 des préformes 12.

Afin de permettre l'adaptation de la largeur de la fente 56 à plusieurs formats de préformes 12, au moins une rampe 54 d'une paire est montée mobile transversalement par rapport au tunnel 22 de chauffage. Ceci permet de faire varier la largeur de la fente 56 entre une largeur maximale "Lmax", représentée aux figures 3 et 5, et une largeur minimale "Lmin" (non représentée). Dans l'exemple représenté aux figures 2 à 6, les deux rampes 54 de la paire sont montées mobiles transversalement par rapport au tunnel 22 de chauffage.

En outre, le déplacement transversal des rampes 54 est commandé par un dispositif 58A motorisé de déplacement transversal pour adapter automatiquement la largeur de la fente 56. Le dispositif 58A motorisé de déplacement transversal est susceptible d'être piloté automatiquement par une unité 60 électronique de commande.

En variante non représentée de l'invention, le module de chauffage est aussi monté mobile transversalement par rapport à la trajectoire des préformes. Le module de chauffage est par exemple solidaire de la rampe ou il est mobile indépendamment par l'intermédiaire d'un mécanisme similaire au mécanisme de déplacement des rampes.

Le dispositif 58A motorisé de déplacement transversal d'une rampe 54 comporte ici plusieurs mécanismes 59A de déplacement transversal qui sont montés le long de la rampe 54. Chaque mécanisme 59A de déplacement transversal est ici formé par un vérin mécanique. Un tel mécanisme 59A de déplacement transversal comporte un écrou 63 qui est monté fixe sur la rampe 54 de protection et une tige 65A qui est ici filetée, comme cela est illustré à la [Fig.2]. La tige 65A peut être guidée en rotation dans un boîtier 67A fixe transversalement par rapport à un bâti 66 de la station 10 de chauffage. Le bâti 66 est plus particulièrement fixe par rapport au sol sur lequel il repose.

La tige 65A est liée à des moyens qui assurent son entraînement en rotation. Ces moyens d'entraînement en rotation comportent ici une roue 68 dentée qui est solidaire en rotation de la tige 65A. La roue 68 dentée est associée à un arbre 70 fileté. Cet arbre 70 fileté s'étend longitudinalement, tout le long de la rampe 54 associée en engrenant la roue 68 dentée de chaque mécanisme 59A de déplacement transversal associé à ladite rampe 54. La roue 68 dentée est ici logée dans le boîtier 67A fixe.

La rotation de l'arbre 70 fileté est commandée par un moteur 74 électrique agencé en bout d'arbre, comme cela est illustré à la [Fig.5]. Suivant le sens de rotation du moteur 74 électrique, cela provoquera le déplacement par translation transversale de la rampe 54 de protection dans un sens ou dans l'autre pour écarter les rampes 54 de protection ou pour les rapprocher.

Les moteurs 74 des dispositifs 58A motorisés de déplacement transversal sont pilotés automatiquement par l'unité 60 électronique de commande.

Les moteurs 74 commandant le déplacement transversal des rampes 54 d'une même paire sont susceptibles d'être pilotés simultanément pour rapprocher ou écarter simultanément les deux rampes 54 de protection l'une par rapport à l'autre d'une même distance. Ainsi, les rampes 54 sont toujours symétriques par rapport à un même plan médian fixe par rapport au bâti 66 quelle que soit la largeur de la fente 56. Lors de leur défilement entre les rampes 54 de la paire, l'axe "A" principal des préformes 12 est sensiblement compris dans ce plan médian.

Bien entendu, le dispositif motorisé de déplacement transversal est ici décrit à titre d'exemple non limitatif. L'invention est applicable à des dispositifs de déplacements de conceptions différentes, tels que des vérins pneumatiques, des vérins hydrauliques, des moteurs électriques linéaires, etc.

En outre, les rampes 54 d'une même paire sont ici réglables en hauteur, parallèlement à l'axe "A" principal des préformes 12 pour permettre d'adapter la position des rampes 54 à différentes hauteurs de col 16 en fonction des formats de préforme 12 susceptibles d'être pris en charge par la station 10 de chauffage. Cette configuration est notamment utile lorsque les formats de préformes 12 susceptibles d'être pris en charge présentent des cols 16 dont les hauteurs "H1" de col varient beaucoup, par exemple présentant une différence de l'ordre de 5 mm.

Ceci permet de faire varier la hauteur des rampes 54 entre une hauteur maximale "Hmax" dans laquelle les rampes 54 sont écartées du col 16 des préformes d'une distance verticale maximale en direction du fond 14 des préformes 12, comme représenté aux figures 3 et 5, et une hauteur minimale "Hmin" (non représentée) dans laquelle les rampes 54 sont remontées vers l'intérieur du tunnel 22.

En fonctionnement de production de la station 10 de chauffage, les rampes 54 doivent être agencées à une distance "h" déterminée des collerettes 20 en direction du fond 14, ici au-dessus des collerettes 20, qui permet aux préformes 12 de défiler le long de leur chemin de chauffage sans contact avec les rampes 54. Cependant, la distance "h" doit être suffisamment faible pour que le corps 18 des préformes 12 soit correctement exposé aux radiations chauffantes ou au rayonnement laser chauffant.

Les déplacements verticaux des rampes 54 sont commandés au moyen d'un dispositif 58B motorisé de déplacement vertical des rampes 54. Comme le dispositif 58A de déplacement transversal, le dispositif 58B motorisé de déplacement vertical comporte des mécanismes 59B de déplacement vertical qui sont agencés le long de la rampe 54 et qui sont commandés simultanément pour déplacer la rampe 54 en translation verticale. Un tel mécanisme 59B de déplacement vertical comporte une tige 65B qui s'étend verticalement et qui est montée coulissante verticalement dans un boîtier 67B fixe par rapport au bâti 66.

Ici, chaque mécanisme 59B de déplacement vertical est agencé au-dessous d'un mécanisme 59A de déplacement transversal associé. Le boîtier 67A de chaque mécanisme de déplacement transversal est monté solidaire en déplacement vertical avec la tige 65B du mécanisme 59B de déplacement vertical associé. Ainsi, le dispositif 58B motorisé de déplacement vertical permet de régler la hauteur de la rampe 54 en déplaçant le dispositif 58A de déplacement transversal. Bien entendu, le moteur 74 et l'arbre 70 fileté sont aussi déplacés verticalement. Les mécanismes 59B de déplacements verticaux sont par exemple formés par des vérins mécaniques, des vérins hydrauliques, des vérins pneumatiques ou des moteurs électriques linéaires.

En variante, les rampes ne sont pas réglables en hauteurs. Dans ce cas, le corps de chaque mécanisme de déplacement transversal est monté fixe par rapport au bâti de la station de chauffage.

Lors d'un changement de format de préformes 12, il est nécessaire de procéder au positionnement précis des rampes 54 afin d'assurer que la fente 56 ait une largeur suffisante pour permettre le bon défilement des préformes 12. En ce cas, la station 10 de chauffage est susceptible de fonctionner selon un mode de fonctionnement de réglage dans lequel certaines fonctions, tel que le chauffage, ne sont pas encore pleinement actives, par opposition à un fonctionnement de production durant lequel toutes les fonctions, y compris la fonction de chauffage, sont actives.

La fente 56 doit cependant être suffisamment étroite pour minimiser la transmission de chaleur, par rayonnement ou par convection, entre le tunnel 22 et le couloir 52, dans le cas où les rampes 54 sont des rampes de protection thermique, ou pour permettre un guidage efficace des préformes, dans le cas où les rampes 54 sont des rampes de guidage.

Lorsque les rampes 54 sont réglables en hauteur, la hauteur doit être réglée de manière à ce que les rampes 54 soient suffisamment proches du col 16 afin de permettre un guidage optimal de la préforme 12 et/ou de protéger efficacement le col 16 du rayonnement thermique sans compromettre le chauffage du corps 18. Cependant, les rampes 54 ne doivent pas être au contact des collerettes 20 pour éviter de détériorer les préformes 12 par frottement.

L'invention propose un procédé de positionnement automatique des rampes 54 d'une paire lors d'un changement de format de préformes 12.

Pour ce faire, l'installation de fabrication est équipée d'un dispositif 78 de capture d'image, comme cela est représenté à la [Fig.1]. Le dispositif 78 de capture d'image est par exemple une caméra ou un appareil photo à capteur numérique apte à prendre une image numérique. Le dispositif 78 de capture d'image est agencé de manière à pouvoir prendre une image d'au moins une partie d'une préforme 12 qui circule le long du trajet de production.

Plus précisément, le dispositif 78 de capture d'image est ici agencé dans la station 10 de chauffage de manière à prendre une image de la préforme 12 qui circule le long du chemin de chauffage lorsqu'elle est portée par un dispositif de transport associé, ici un mandrin 30. Le dispositif 78 de capture d'image est plus particulièrement agencé de manière à prendre une image de la préforme 12 lorsqu'elle passe dans une zone "Z1" d'acquisition déterminée du chemin de chauffage.

Plus précisément, le dispositif 78 de capture d'image est agencé de manière à prendre le profil au moins du tronçon 21 sous col de la préforme 12 selon une direction radiale par rapport à l'axe "A" de la préforme 12. Comme cela sera expliqué par la suite, cela permettra de déterminer le diamètre "D1" sous col de la préforme 12 afin de régler la largeur de la fente 56.

En outre, lorsque les rampes 54 peuvent être réglées en hauteur, comme c'est ici le cas, le dispositif 78 de capture d'image est agencé de manière à prendre le profil au moins du col 16 et du tronçon 21 sous col de la préforme 12 selon une direction radiale par rapport à l'axe "A" de la préforme 12. Comme cela sera expliqué par la suite, cela permettra de déterminer hauteur "H1" du col 16 de la préforme 12 afin de régler la hauteur des rampes 54.

La zone "Z1" d'acquisition est ici agencée dans le virage 22c d'extrémité. Le dispositif 78 de capture d'image est ici agencé à l'extérieur du virage 22c d'extrémité. Cet agencement est particulièrement avantageux car cette région de la station 10 de chauffage dispose généralement d'un espace libre suffisant pour recevoir le dispositif 78 de capture d'image. En outre, le tunnel 22 est dénué de moyens de chauffage dans son virage 22c, ce qui permet d'éviter que le dispositif 78 de capture d'image ne soit endommagé par des températures trop élevées.

En variante, la zone d'acquisition peut être agencée en tout autre point du chemin de chauffage situé dans une région permettant l'agencement d'un dispositif de capture d'image.

Selon encore une autre variante, le dispositif de capture d'image est agencé de manière à acquérir une image de la préforme lorsqu'elle circule sur une partie du trajet de production qui ne fait pas partie du chemin de chauffage, par exemple en amont de la station de chauffage.

Avantageusement, le dispositif 78 de capture d'image est agencé à une distance "C" prédéterminée de la préforme 12 située dans la zone "Z1" d'acquisition lors de l'opération d'acquisition de l'image. Ceci permet de connaître l'échelle à laquelle la préforme 12 apparaît sur l'image sans avoir besoin de se référer à un repère visuel. Le dispositif 78 de capture est conçu et positionné de manière à prendre une image numérique de la préforme 12 présentant une résolution suffisamment élevée pour réaliser les opérations permettant de déterminer le diamètre "D1" sous col et, éventuellement, la hauteur "H1" du col 16, avec une précision inférieure au millimètre.

Chacune des étapes du procédé de positionnement sont réalisées automatiquement par l'unité 60 électronique de commande.

Le procédé est réalisé en chargeant une préforme 12 sur un mandrin 30, puis en déclenchant le déplacement des organes 28 de transport comme lors du fonctionnement en production de la station 10 de chauffage. Cependant, seul un nombre limité de préformes 12, par exemple une seule, est chargé sur la station 10 de chauffage pendant la réalisation du procédé.

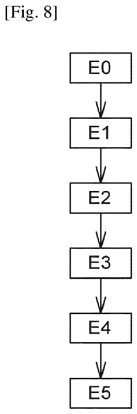

En référence à la [Fig.8], le procédé de positionnement comporte une étape "E0" préalable de positionnement initial des rampes 54.

Lors de cette étape "E0" préalable de positionnement initial, les rampes 54 sont écartées au moyen des dispositifs 58A de déplacement transversal jusqu'à ce que la fente 56 présente sa largeur maximale "Lmax". Cette étape "E0" de positionnement initial est notamment requise lorsque l'étape suivante d'acquisition est réalisée après que la préforme 12 se soit engagée entre des rampes 54 de la station 10 de chauffage.

Dans le cas présent, la préforme 12 est chargée sur un mandrin 30 au point 35 de chargement habituel, puis elle parcourt le premier tronçon 22a longitudinal entre une première paire de rampes 54 avant d'arriver dans la zone "Z1" d'acquisition située dans le virage 22c d'extrémité. Ainsi, bien que la préforme 12 ne soit pas engagée entre des rampes 54 lorsqu'elle occupe la zone "Z1" d'acquisition, elle a dû être engagée entre les rampes 54 du premier tronçon 22a longitudinal avant d'atteindre la zone "Z1" d'acquisition. L'étape "E0" de positionnement initial est donc requise préalablement au transport de la préforme 12 le long du chemin de chauffage.

En outre, cette étape "E0" de positionnement initial est aussi requise lorsque la préforme 12 est destinée à être engagée entre des rampes 54 rapidement après son passage par la zone "Z1" d'acquisition, notamment lorsque le temps nécessaire au réglage de la position des rampes 54 ne permet pas de garantir que la fente 56 aura une largeur suffisante pour permettre le passage de la préforme 12 lors de son arrivée à l'entrée de la fente 56.

En revanche, si la préforme 12 n'est pas destinée à être engagée entre des rampes avant d'occuper la zone "Z1" d'acquisition ou rapidement après son passage par la zone "Z1" d'acquisition, il est possible d'omettre l'étape "E0" préalable de positionnement initial dans le déroulement du procédé de positionnement.

Lorsque les rampes 54 sont réglables en hauteur, les rampes 54 sont commandées à leur hauteur "Hmax" par le dispositif 58B motorisé de déplacement vertical pendant cette étape "E0" préalable de positionnement initial.

Le procédé de positionnement comporte une première étape "E1" d'acquisition d'une image de la préforme 12. Cette étape "E1" d'acquisition est déclenchée lorsque la préforme 12 passe par la zone "Z1" d'acquisition du chemin de chauffage. Avantageusement, la préforme 12 se déplace constamment sans s'arrêter dans la zone "Z1" d'acquisition. L'image obtenue est communiquée à l'unité 60 électronique de commande.

Lorsque le procédé comporte l'étape "E0" préalable de positionnement initial, cette étape "E1" d'acquisition est généralement réalisée chronologiquement après ladite étape "E0" préalable de positionnement initial.

A l'issue de l'étape "E1" d'acquisition, une deuxième étape "E2" de détermination automatique du diamètre "D1" sous col est déclenchée. Au cours de cette étape, de la préforme par traitement informatique de ladite image au moyen de l'unité 60 électronique de commande.

Lorsque les rampes 54 sont aussi réglables automatiquement en hauteur, le procédé comporte aussi une troisième étape "E3 de détermination automatique de la hauteur "H1" de col 16 par traitement informatique de ladite image. Cette troisième étape "E3" de détermination de la hauteur "H1" de col 16 peut être réalisée avant, après ou en même temps que la deuxième étape "E2" de détermination du diamètre "D1" sous col. En tous les cas, cette troisième étape "E3" de détermination de la hauteur "H1" de col 16 est déclenchée chronologiquement après la première étape "E1" d'acquisition.

Lors de chacune des deuxième et troisième étapes "E2" et "E3" de détermination, les dimensions recherchées, respectivement le diamètre "D1" sous col et la hauteur "H1" de col 16, sont obtenues par multiplication de ladite dimension mesurée sur l'image par un coefficient "K" de proportionnalité prédéterminé. Le coefficient "K" de proportionnalité est notamment calculé en fonction de différents paramètres connus tels que la distance entre le dispositif 78 de capture d'image et les caractéristiques de l'optique l'équipant.

Le coefficient "K" de proportionnalité peut aussi être défini expérimentalement lors d'une opération d'étalonnage préalable.

Selon une variante de réalisation des deuxième et troisième étapes "E2"; "E3" de détermination, le contour de la partie de préforme représenté sur l'image, dit "contour détecté" est comparé avec des contours de préformes mémorisés au préalable dans l'unité 60 électronique de commande, dits "contours types". En effet, le nombre de formats de préformes 12 susceptibles d'être traitées par la station 10 de chauffage est généralement limité. Il est ainsi possible de mémoriser de manière exhaustive un contour type pour chacun de ces formats de préformes dans l'unité 60 électronique de commande.

Chaque contour type mémorisé est associé à un diamètre "D1" sous col et/ou à une hauteur "H1" de col 16 mémorisés dans une base de données de l'unité 60 électronique de commande.

Lorsque la forme et les dimensions particulières du contour détecté correspondent sensiblement à celles d'un contour type similaire mémorisé, l'unité 60 électronique de commande est ainsi susceptible d'identifier automatiquement le contour type parmi les contours types mémorisés par reconnaissance de formes. L'unité 60 électronique de commande est ensuite apte à retrouver le diamètre "D1" sous col et la hauteur "H1" de col 16 correspondants dans la base de donnée.

Le procédé comporte aussi une quatrième étape "E4" d'ajustement automatique de la largeur de la fente 56 par déplacement de l'au moins une rampe 54 mobile en fonction du diamètre "D1" sous col déterminé lors de la deuxième étape "E2" de détermination du diamètre "D1" sous col afin d'ajuster la largeur de la fente 56 jusqu'à une largeur de passage égale au diamètre "D1" sous col additionné du jeu "j" transversal déterminé. Ici, les deux rampes 54 de la paire sont commandées en déplacement simultané. A cet effet, l'unité 60 électronique de commande pilote les dispositifs 58A motorisés de déplacement transversal. Cette quatrième étape "E4" d'ajustement de la largeur intervient chronologiquement après la deuxième étape "E2" de détermination du diamètre "D1" sous col.

Le procédé comporte aussi une cinquième étape "E5" d'ajustement automatique de la hauteur des rampes 54 en fonction de la hauteur "H1" de col déterminée lors la troisième étape "E3" de détermination de la hauteur de col pour amener les rampes 54 à la distance "h" déterminée de la collerette 20. A cet effet, l'unité 60 électronique de commande pilote les dispositifs 58B motorisés de déplacement vertical. Cette cinquième étape "E5" d'ajustement automatique de la hauteur intervient chronologiquement après la troisième étape "E3" de détermination de la hauteur "H1" de col 16.

La quatrième étape "E4" d'ajustement de la largeur et la cinquième étape "E5" d'ajustement automatique de la hauteur peuvent être réalisées simultanément ou l'une après l'autre dans un ordre quelconque.

Le procédé réalisé selon les enseignements de l'invention permet avantageusement de réaliser le positionnement automatique des rampes 54 lors d'un changement de formats de préformes 12 afin d'obtenir une fente 56 de largeur optimale et/ou un agencement à une hauteur optimale. Ce procédé permet d'exclure les erreurs humaines inhérentes à une entrée manuelle des données, à une erreur d'étiquetage du lot de préformes ou encore à une fabrication défaillante des préformes.

## Revendications

1. Procédé de positionnement automatique de rampes (54) dans une station (10) de chauffage de préformes (12) d'une installation de fabrication de récipients à partir de préformes (12) en matériau thermoplastique,
chaque préforme (12) présentant un col (16) et, directement au-dessous du col (16), un tronçon (21) sous col de diamètre extérieur dit "diamètre (D1) sous col", la station (10) de chauffage comportant :
- au moins une paire de rampes (54) longitudinales qui délimitent une fente (56) de défilement des préformes (12), au moins l'une des rampes (54) étant mobile transversalement pour faire varier la largeur de la fente (56) ;
- au moins un dispositif (58A) motorisé de déplacement transversal de l'au moins une rampe (54) mobile pour adapter la largeur de la fente (56), ledit dispositif (58A) motorisé étant piloté automatiquement par une unité (60) électronique de commande ;
le procédé de positionnement lors d'un changement de format de préformes (12) étant **caractérisé en ce qu'**il comporte :
- une étape (E1) d'acquisition d'une image d'au moins une partie de la préforme (12) prise au moyen d'un dispositif (78) de capture d'image ;
- une étape (E2) de détermination automatique du diamètre (D1) sous col de la préforme par traitement informatique de ladite image ;
- une étape (E4) d'ajustement automatique de la largeur de la fente (56) par déplacement de l'au moins une rampe (54) mobile en fonction du diamètre (D1) sous col déterminé lors de l'étape (E2) de détermination du diamètre sous col afin d'adapter la largeur de la fente (56) jusqu'à une largeur de passage égale au diamètre (D1) sous col additionné d'un jeu (j) transversal déterminé.

2. Procédé selon la revendication précédente, **caractérisé en ce que** lors de l'étape (E1) d'acquisition, le dispositif (78) de capture d'image prend le profil au moins du tronçon (21) sous col de la préforme (12).

3. Procédé selon la revendication précédente, **caractérisé en ce que** le dispositif (78) de capture d'image est agencé à une distance (C) prédéterminée de la préforme (12) lors de l'opération de prise d'image.

4. Procédé selon la revendication précédente, **caractérisé en ce que** lors de l'étape (E2) de détermination du diamètre (D1) sous col, le diamètre (D1) sous col est obtenu par multiplication de la largeur du tronçon (21) sous col mesurée sur l'image par un coefficient (K) de proportionnalité prédéterminée.

5. Procédé selon l'une quelconque des revendications 3 ou 4, **caractérisé en ce que** lors de l'étape (E2) de détermination du diamètre (D1) sous col, le contour de la partie de préforme (12) représentée sur l'image est comparé avec des contours de préformes mémorisés par l'unité (60) électronique de commande, chaque contour mémorisé étant associé à un diamètre (D1) sous col mémorisé par l'unité (60) électronique de commande.

6. Procédé selon l'une quelconque des revendications 2 ou 3, **caractérisé en ce que** les préformes (12) présentent un axe (A) principal orthogonal à leur sens de défilement, le col (16) des préformes (12) présentant une collerette (20) agencée à la jonction avec le tronçon (21) sous col,
et **en ce que** les rampes (54) de la paire sont réglables en hauteur, parallèlement à l'axe (A) principal des préformes au moyen d'un dispositif (58B) motorisé de déplacement vertical des rampes (54),
et **en ce que** lors de l'étape (E1) d'acquisition, le dispositif (78) de capture d'image prend le profil au moins du col (16) et du tronçon (21) sous col de la préforme (12), le procédé comportant une étape (E3) de détermination automatique d'une hauteur (H1) de col (16) par traitement informatique de ladite image, cette étape (E3) de détermination de la hauteur de col étant suivie d'une étape (E5) d'ajustement automatique de la hauteur des rampes (54) en fonction de la hauteur (H1) de col déterminée.

7. Procédé selon la revendication précédente prise en combinaison avec la revendication 3, **caractérisé en ce que** lors de l'étape (E3) de détermination de la hauteur de col, la hauteur (H1) de col est obtenue par multiplication de la hauteur de col mesurée sur l'image par un coefficient (K) de proportionnalité prédéterminée.

8. Procédé selon la revendication 6, **caractérisé en ce que** lors de l'étape (E3) de détermination de la hauteur de col, le contour de l'image est comparé avec des contours de préformes mémorisés par l'unité (60) électronique de commande, chaque contour mémorisé étant associé à une hauteur (H1) de col mémorisée par l'unité (60) électronique de commande.

9. Procédé selon l'une quelconque des revendications précédentes, **caractérisé en ce que** l'étape (E1) d'acquisition est réalisée sur une préforme (12) qui circule le long d'un trajet de production dans l'installation de fabrication.

10. Procédé selon l'une quelconque des revendications précédentes, **caractérisé en ce que** l'étape (E1) d'acquisition étant réalisée sur une préforme (12) qui circule dans la station (10) de chauffage dans une zone déterminée le long d'un chemin de chauffage.

11. Procédé selon la revendication précédente, **caractérisé en ce qu'**il comporte une étape (E0) préalable de positionnement initial des rampes (54) automatiquement jusqu'à ce que la fente (56) présente une largeur maximale (Lmax).

12. Procédé selon la revendication précédente prise en combinaison avec la revendication 6, **caractérisé en ce que** lors de l'étape (E0) préalable de positionnement initial automatique des rampes (54), les rampes (54) sont déplacées verticalement jusqu'à une hauteur maximale (Hmax) dans laquelle les rampes (54) sont écartées du col (16) de la préforme (12) d'une distance verticale maximale.

13. Procédé selon l'une quelconque des revendications 10 à 12, **caractérisé en ce qu'**au moins une paire de rampes (54) est formée de rampes de protection thermique du col (16) des préformes.

14. Procédé selon l'une quelconque des revendications 10 à 12, **caractérisé en ce qu'**au moins une paire de rampes (54) est formée de rampes de guidage de la préforme (12).

## Patentansprüche

1. Verfahren zur automatischen Positionierung von Rampen (54) in einer Heizstation (10) von Vorformlingen (12) einer Anlage zur Herstellung von Behältern ausgehend von Vorformlingen (12) aus thermoplastischem Material,
wobei jeder Vorformling (12) einen Hals (16) und direkt unterhalb des Halses (16) einen Unter-Hals-Abschnitt (21) mit einem "Unter-Hals-Durchmesser (D1)" genannten Außendurchmesser aufweist, wobei die Heizstation (10) aufweist:
- mindestens ein Paar von Längsrampen (54), die einen Durchlaufschlitz (56) der Vorformlinge (12) begrenzen, wobei mindestens eine der Rampen (54) in Querrichtung beweglich ist, um die Breite des Schlitzes (56) zu variieren;
- mindestens eine motorisierte Vorrichtung (58A) zur Querverschiebung der mindestens einen beweglichen Rampe (54), um die Breite des Schlitzes (56) anzupassen, wobei die motorisierte Vorrichtung (58A) automatisch von einer elektronischen Steuereinheit (60) gesteuert wird;
wobei das Positionierverfahren bei einer Formatänderung von Vorformlingen (12) **dadurch gekennzeichnet ist, dass** es aufweist:
- einen Schritt (E1) der Erfassung eines Bilds mindestens eines Teils des Vorformlings (12), das mittels einer Bilderfassungsvorrichtung (78) aufgenommen wird;
- einen Schritt (E2) der automatischen Bestimmung des Unter-Hals-Durchmessers (D1) des Vorformlings durch elektronische Datenverarbeitung des Bilds;
- einen Schritt (E4) der automatischen Justierung der Breite des Schlitzes (56) durch Verschiebung der mindestens einen beweglichen Rampe (54) abhängig vom im Schritt (E2) der Bestimmung des Unter-Hals-Durchmessers bestimmten Unter-Hals-Durchmesser (D1), um die Breite des Schlitzes (56) bis zu einer Durchgangsbreite gleich dem Unter-Hals-Durchmesser (D1) unter Hinzufügung eines bestimmten Querspielraums (j) anzupassen.

2. Verfahren nach dem vorhergehenden Anspruch, **dadurch gekennzeichnet, dass** im Erfassungsschritt (E1) die Bilderfassungsvorrichtung (78) das Profil mindestens des Unter-Hals-Abschnitts (21) des Vorformlings (12) aufnimmt.

3. Verfahren nach dem vorhergehenden Anspruch, **dadurch gekennzeichnet, dass** die Bilderfassungsvorrichtung (78) beim Bildaufnahmevorgang in einem vorbestimmten Abstand (C) vom Vorformling (12) angeordnet ist.

4. Verfahren nach dem vorhergehenden Anspruch, **dadurch gekennzeichnet, dass** im Schritt (E2) der Bestimmung des Unter-Hals-Durchmessers (D1) der Unter-Hals-Durchmesser (D1) durch Multiplikation der im Bild gemessenen Breite des Unter-Hals-Abschnitts (21) mit einem vorbestimmten Proportionalitätskoeffizienten (K) erhalten wird.

5. Verfahren nach einem der Ansprüche 3 oder 4, **dadurch gekennzeichnet, dass** im Schritt (E2) der Bestimmung des Unter-Hals-Durchmessers (D1) der Umriss des im Bild dargestellten Vorformlingteils (12) mit von der elektronischen Steuereinheit (60) gespeicherten Umrissen von Vorformlingen verglichen wird, wobei jeder gespeicherte Umriss einem von der elektronischen Steuereinheit (60) gespeicherten Unter-Hals-Durchmesser (D1) zugeordnet wird.

6. Verfahren nach einem der Ansprüche 2 oder 3, **dadurch gekennzeichnet, dass** die Vorformlinge (12) eine Hauptachse (A) orthogonal zu ihrer Durchlaufrichtung aufweisen, wobei der Hals (16) der Vorformlinge (12) einen Kragen (20) aufweist, der an der Verbindungsstelle mit dem Unter-Hals-Abschnitt (21) angeordnet ist,
und dass die Rampen (54) des Paars parallel zur Hauptachse (A) der Vorformlinge mit Hilfe einer motorisierten Vorrichtung (58B) zur senkrechten Verschiebung der Rampen (54) in der Höhe einstellbar sind,
und dass im Erfassungsschritt (E1) die Bilderfassungsvorrichtung (78) das Profil mindestens des Halses (16) und des Unter-Hals-Abschnitts (21) des Vorformlings (12) aufnimmt, wobei das Verfahren einen Schritt (E3) der automatischen Bestimmung einer Höhe (H1) des Halses (16) durch elektronische Datenverarbeitung des Bilds aufweist, wobei auf diesen Schritt (E3) der Bestimmung der Halshöhe ein Schritt (E5) der automatischen Justierung der Höhe der Rampen (54) abhängig von der bestimmten Halshöhe (H1) folgt.

7. Verfahren nach dem vorhergehenden Anspruch in Kombination mit Anspruch 3, **dadurch gekennzeichnet, dass** im Schritt (E3) der Bestimmung der Halshöhe die Halshöhe (H1) durch Multiplikation der im Bild gemessenen Halshöhe mit einem vorbestimmten Proportionalitätskoeffizienten (K) erhalten wird.

8. Verfahren nach Anspruch 6, **dadurch gekennzeichnet, dass** im Schritt (E3) der Bestimmung der Halshöhe der Umriss des Bilds mit von der elektronischen Steuereinheit (60) gespeicherten Umrissen von Vorformlingen verglichen wird, wobei jeder gespeicherte Umriss einer von der elektronischen Steuereinheit (60) gespeicherten Halshöhe (H1) zugeordnet ist.

9. Verfahren nach einem der vorhergehenden Ansprüche, **dadurch gekennzeichnet, dass** der Erfassungsschritt (E1) an einem Vorformling (12) durchgeführt wird, der entlang einer Fertigungsstrecke in der Herstellungsanlage umläuft.

10. Verfahren nach einem der vorhergehenden Ansprüche, **dadurch gekennzeichnet, dass** der Erfassungsschritt (E1) an einem Vorformling (12) durchgeführt wird, der in der Heizstation (10) in einer bestimmten Zone entlang eines Heizpfads umläuft.

11. Verfahren nach dem vorhergehenden Anspruch, **dadurch gekennzeichnet, dass** es einen vorhergehenden Schritt (E0) der Ausgangspositionierung der Rampen (54) automatisch bis der Schlitz (56) eine maximale Breite (Lmax) hat aufweist.

12. Verfahren nach dem vorhergehenden Anspruch in Kombination mit Anspruch 6, **dadurch gekennzeichnet, dass** im vorhergehenden Schritt (E0) der automatischen Ausgangspositionierung der Rampen (54) die Rampen (54) senkrecht bis zu einer maximalen Höhe (Hmax) verschoben werden, in der die Rampen (54) vom Hals (16) des Vorformlings (12) um einen maximalen senkrechten Abstand entfernt sind.

13. Verfahren nach einem der Ansprüche 10 bis 12, **dadurch gekennzeichnet, dass** mindestens ein Paar von Rampen (54) von Wärmeschutzrampen des Halses (16) der Vorformlinge gebildet wird.

14. Verfahren nach einem der Ansprüche 10 bis 12, **dadurch gekennzeichnet, dass** mindestens ein Paar von Rampen (54) von Führungsrampen des Vorformlings (12) gebildet wird.

## Claims

1. Method for automatically positioning ramps (54) in a station (10) for heating preforms (12) of a facility for manufacturing containers from preforms (12) made from a thermoplastic material, each preform (12) having a neck (16) and, directly below the neck (16), an under-neck section (21) with an outer diameter referred to as the "under-neck diameter (D1)", the heating station (10) comprising:
- at least one pair of longitudinal ramps (54) that define a slot (56) for the preforms (12) to travel through, at least one of the ramps (54) being transversely movable in order to vary the width of the slot (56);
- at least one motorized device (58A) for transversely moving the at least one movable ramp (54) in order to adapt the width of the slot (56), said motorized device (58A) being automatically controlled by an electronic control unit (60);
the positioning method during a change of format of preforms (12) being **characterized in that** it comprises:
- a step (E1) of acquiring an image of at least part of the preform (12) taken by means of an image capturing device (78);
- a step (E2) of automatically determining the under-neck diameter (D1) of the preform by computer processing of said image;
- a step (E4) of automatically adjusting the width of the slot (56) by moving the at least one movable ramp (54) as a function of the under-neck diameter (D1) determined during the step (E2) of determining the under-neck diameter in order to adapt the width of the slot (56) to a passage width equal to the under-neck diameter (D1) plus a determined transverse clearance (j).

2. Method according to the preceding claim, **characterized in that**, during the acquisition step (E1), the image capturing device (78) takes the profile at least of the under-neck section (21) of the preform (12).

3. Method according to the preceding claim, **characterized in that** the image capturing device (78) is arranged at a predetermined distance (C) from the preform (12) during the image acquisition operation.

4. Method according to the preceding claim, **characterized in that** during the step (E2) of determining the under-neck diameter (D1), the under-neck diameter (D1) is obtained by multiplying the width of the under-neck section (21) measured on the image by a predetermined proportionality coefficient (K).

5. Method according to either one of Claims 3 and 4, **characterized in that** during the step (E2) of determining the under-neck diameter (D1), the outline of the part of the preform (12) shown in the image is compared with preform outlines stored by the electronic control unit (60), each stored outline being associated with an under-neck diameter (D1) stored by the electronic control unit (60) .

6. Method according to either one of Claims 2 and 3, **characterized in that** the preforms (12) have a main axis (A) orthogonal to their direction of travel, the neck (16) of the preforms (12) having a collar (20) arranged at the join with the under-neck section (21),
and **in that** the ramps (54) in the pair are height-adjustable, parallel to the main axis (A) of the preforms, by means of a motorized device (58B) for vertical movement of the ramps (54),
and **in that**, during the acquisition step (E1), the image capturing device (78) takes the profile at least of the neck (16) and the under-neck section (21) of the preform (12), the method comprising a step (E3) of automatically determining a height (H1) of the neck (16) by computer processing of said image, this step (E3) of determining the neck height being followed by a step (E5) of automatically adjusting the height of the ramps (54) as a function of the neck height (H1) determined.

7. Method according to the preceding claim taken in combination with Claim 3, **characterized in that** during the step (E3) of determining the neck height, the neck height (H1) is obtained by multiplying the neck height measured on the image by a predetermined proportionality coefficient (K).

8. Method according to Claim 6, **characterized in that** during the step (E3) of determining the neck height, the outline of the image is compared with preform outlines stored by the electronic control unit (60), each stored outline being associated with a neck height (H1) stored by the electronic control unit (60).

9. Method according to any one of the preceding claims, **characterized in that** the acquisition step (E1) is carried out on a preform (12) that is travelling along a production route in the manufacturing facility.

10. Method according to any one of the preceding claims, **characterized in that** the acquisition step (E1) is carried out on a preform (12) that is travelling in the heating station (10) in a determined zone along a heating path.

11. Method according to the preceding claim, **characterized in that** it comprises a prior step (E0) of initially automatically positioning the ramps (54) until the slot (56) has a maximum width (Lmax).

12. Method according to the preceding claim taken in combination with Claim 6, **characterized in that** during the prior step (E0) of initially automatically positioning the ramps (54), the ramps (54) are moved vertically to a maximum height (Hmax) at which the ramps (54) are spaced apart from the neck (16) of the preform (12) by a maximum vertical distance.

13. Method according to any one of Claims 10 to 12, **characterized in that** at least one pair of ramps (54) is formed by ramps for thermally protecting the neck (16) of the preforms.

14. Method according to any one of Claims 10 to 12, **characterized in that** at least one pair of ramps (54) is formed by ramps for guiding the preform (12).
